# EUROPÄISCHE PATENTANMELDUNG

(11) **EP 1 321 792 A1**
(43) Veröffentlichungstag der Anmeldung: **25.06.2003**
(21) Anmeldenummer: 01130721.2
(22) Anmeldetag: 21.12.2001
(51) Int. Cl.: G02B 7/182, G02B 26/12

(54) **Vorrichtung und Verfahren zum Steuern der räumlichen Strahllage von Laserstrahlen und Aktor hierfür**

(71) Anmelder: Agfa-Gevaert AG, 51373 Leverkusen (DE)
(72) Erfinder: Müller-Wirts, Thomas, 30559 Hannover (DE)

(57) **Zusammenfassung**

Die Erfindung betrifft eine Vorrichtung zum Steuern der räumlichen Strahllage von Laserstrahlen z.B. in einem Laserbelichter mit einem Positionsdetektor, zum Bestimmen der aktuellen Strahllage und einem Steuerelement zum Ermitteln der Steuergröße anhand der Differenz zwischen aktueller und angestrebter Strahllage. Zum Verändern der Strahllage ist ein Aktor vorgesehen, welcher ein optisches Element bewegt, über das der Laserstrahl geführt wird. Der Aktor weist ein, mit einem positionsbestimmenden Aktorelement verbundenes, steuerbares Heizelement auf, zum Bewegen des Aktors durch thermische Ausdehnung aufgrund von Erwärmung des Aktorelements.

## Beschreibung

Die Erfindung betrifft eine Vorrichtung nach dem Oberbegriff von Anspruch 1 sowie ein Verfahren nach dem Oberbegriff von Anspruch 10 sowie einen Aktor zur Durchführung des Verfahrens.

Im Bereich der Fotopapier- und -filmbelichtung, aber auch in vielen anderen Bereichen der technischen Optik ist es erforderlich, Laserstrahlen mit hoher Präzision über einen langen Zeitraum in ihrer Strahllage im Raum konstant zu halten. Hierbei spielen insbesondere thermische Driften, sowohl des Lasers, als auch der strahlführenden Optik und Mechanik eine störende Rolle. Aber auch die mechanischen Verbindungen, wie Verschraubungen und Klebungen zeigen Drifteffekte: Verschraubungen können unter Einfluss von starken Beschleunigungskräften und Temperaturschwankungen (z. B. beim Transport eines Gerätes) bleibende Dejustagen verursachen. Klebungen zeigen durch einen nicht vollständig abgeschlossenen Polymerisationsprozess zum Teil auch noch nach Wochen oder Jahren Drift- oder Fließerscheinungen. Weiterhin müssen im Bereich der Klebungen empfindliche Kompromisse eingegangen werden zwischen einer elastischen Verbindung, die weniger empfindlich gegenüber Temperaturschwankungen und Stoßbelastungen der zusammengefügten Elemente ist, und einer "harten" mechanisch reproduzierbaren Verbindung, die eine erforderliche optische Nachjustage vermeiden soll.

Durch die gegebenen Randbedingungen, wie die zur Verfügung stehenden Materialien, die räumlichen Dimensionen und nicht zuletzt durch den finanziellen Rahmen der Entwicklung und Herstellung sind eine ausreichende mechanische Reproduzierbarkeit und Driftfreiheit oft nicht zu gewährleisten. Hierbei kann eine aktive Strahllagenstabilisierung eine gute und unter Umständen preiswerte Lösung darstellen.

Eine solche Regelung erfordert die Möglichkeit der Beeinflussung der Strahllage durch geeignete Aktoren, die optischen Komponenten, wie z. B. Spiegel, Linsen, etc. Auf geeignete Weise bewegen oder in ihren optischen Eigenschaften beeinflussen können. Weiterhin ist eine Sensoreinheit erforderlich, die die unerwünschten Einflüsse der Strahllagenänderung erfassen kann. Die gewonnenen Sensorsignale werden einer Reglereinheit zugeführt, die über (meist elektrische) Steuergrößen mit Hilfe der Aktoren die Strahllage auf die gewünschte Sollposition zurückführt.

Eine derartige Strahllagenstabilisierung ist beispielsweise aus der US 6,236,040 bekannt. Hier soll der Abstand zweier Laserstrahlen in einem elektrofotografischen oder sonstigen Laserbelichter zueinander konstant gehalten werden. Dies geschieht, indem Kontrollelemente die tatsächliche Position der Laserstrahlen bestimmen, die gemessenen Positionen miteinander verglichen werden, um den aktuellen Abstand zu ermitteln und bei einem Abweichen dieses Abstands vom gewünschten Abstand mittels im Strahlengang des Lasers befindlicher optischer Elemente die Laserpositionen korrigiert werden. Die optischen Elemente werden durch Linearschrittmotoren bewegt.

Nachteilig an diesem Verfahren ist jedoch, dass bei der Verwendung von einfachen Schrittmotoren immer nur konkrete Versatzschritte des Laserstrahls möglich sind, wodurch eine sehr exakte Positionierung des Laserstrahls nicht möglich ist.

Verwendet man dagegen hochpräzise Schrittmotoren, welche auch sehr kleine Schrittweiten ermöglichen, so wird das System sehr teuer und aufwändig.

Aus diesem Grund wird oftmals versucht die Laser derartig auszubilden, dass eine Strahllagenstabilisierung nicht notwendig ist. Hierzu ist jedoch ein erheblicher Aufwand zur Verbesserung der mechanischen Langzeitstabilität des optischen Aufbaus des Laserbelichters notwendig. Unter Umständen müssen zu Gunsten der thermischen Ausdehnungseigenschaften kritische Kompromisse zwischen mechanischen Eigenschaften, wie mechanischer Dämpfung, Gewicht, Größe, Bearbeitbarkeit der verwendeten Materialien und vor allem dem Herstellungspreis gefunden werden. Ein erheblicher Nachteil stellt hierbei auch die erforderliche exakte Nachjustage eines optischen Geräts vor Ort durch geschultes Fachpersonal dar. Aber auch bereits während der Fertigung des Geräts können die Kosten für Präzisionsmechanik, sowie für den zugehörenden Zeitaufwand einer präzisen Justage durchaus eine dominierende Rolle spielen. Aus diesem Grund ist es oftmals keine geeignete Lösung einen sehr stabilen Laser zu wählen, vielmehr wäre es sinnvoller einen kostengünstigen Laser einzusetzen und eine geeignete Strahllagenstabilisierung durchzuführen.

Insbesondere im Gebiet der Fotolaserbelichtunggeräte ist eine derartige Strahllagenstabilisierung von besonderem Interesse, da hier extrem hohe Anforderungen an die Stabilität von Laserstrahlen zu stellen sind. Beim Belichten von fotografischen Daten auf lichtempfindliches Material ist es notwendig, die Übereinstimmung der Strahllagen von drei über Strahlkombinierer vereinigten Laserstrahlen mit drei verschiedenen Wellenlängen (rot, grün und blau) zuverlässig über den Zeitraum der Lebensdauer des Belichtungsgerätes zu gewährleisten, möglichst ohne erforderlichen manuellen Eingriff. Die typischen Anforderungen an die Strahllagestabilitäten der verwendeten Laser (an das sogenannte Beam-Pointing) sind hoch und von vielen auf dem Markt befindlichen Lasern praktisch nicht oder nur mit Kompromissen zu erfüllen: Räumliche Kurzzeitstabilität, Rauscheigenschaften, Wellenlängenstabilität und andere Eigenschaften werden ausreichend beherrscht. Die unter anderem durch den Einfluss der Umgebungstemperatur bedingte Drift des Pointings stellt jedoch nach wie vor ein Problem dar.

Eine komplette thermische Stabilisierung des gesamten Aufbaus kann zwar vorgenommen werden, sie ist jedoch mit vertretbarem Aufwand nur bis zu einem gewissen Grad erfolgreich. Außerdem werden durch die verwendeten Laser und Modulatoren relativ große elektrische Leistungen dissipiert, so dass sich im Gerät nichtkonstante Temperaturgradienten aufbauen, die die Strahllagestabilität sehr ungünstig beeinflussen. Auch scheidet hierdurch eine hermetische massive Kapselung aus, wie es in "passiven", nicht Wärme dissipierenden Geräten möglich wäre. Eine Erhöhung der mechanischen Steifigkeit und der Masse verringert zwar den Einfluss von Temperaturgradienten. Dies kann aber die Zeit bis zum Einstellen eines thermischen Gleichgewichtes eventuell in einem nicht vertretbaren Maß erhöhen.

Der Erfindung liegt also die Aufgabe zu Grunde, ohne erforderlichen manuellen Eingriff das Einstellen oder das Festhalten der Strahllage eines Laserstrahls innerhalb eines eng tolerierten Bereiches bzw. die Übereinstimmung der Strahllagen von mehreren über Strahlkombinierer vereinigten Laserstrahlen zuverlässig über einen langen Zeitraum zu ermöglichen. Die Erfindung soll die Herstellung von besonders einfachen und preiswerten Aktoren gestatten.

Gelöst wird diese Aufgabe gemäß der Erfindung durch eine Vorrichtung mit den Merkmalen von Anspruch 1 und ein Verfahren mit den Merkmalen von Anspruch 10 sowie einen hierfür verwendeten Aktor gemäß Anspruch 13. Weitere vorteilhafte Ausführungsformen sind Bestandteil der Unteransprüche im Zusammenhang mit der Beschreibung und den Zeichnungen.

Die exakte Positionierung des Lasers anhand eines aus der Differenz zwischen aktueller Strahllage und Sollwert vorher ermittelten Wertes wird mittels eines thermischen Aktors vorgenommen. Erfindungsgemäß wird hierfür ein besonders einfacher, kostengünstig herstellbarer aberhochpräzise betreibbarer Aktor vorgeschlagen. Ein derartiger thermischer Aktor weist ein steuerbares Heizelement auf, welches mit für die Bewegung des Aktors verantwortlichen Aktorelementen in Kontakt steht. Dieses Heizelement kann im einfachsten Fall aus stromdurchflossenen Leitern bestehen, welche mit einer Stromquelle in Verbindung stehen. Abhängig von dem durch die zu bewegenden Aktorelemente fließenden Strom kann eine gezielte Aufheizung dieser Elemente erreicht werden. Diese sehr einfache primäre Heizmethode ermöglicht einen besonders einfachen und kompakten Aufbau des Aktors, da die bewegten, positionsbestimmenden Elemente gleichzeitig die zu heizenden Elemente darstellen. Da das Driften der Laserstrahlen insbesondere durch thermische Effekte verursacht wird, ist es besonders vorteilhaft, diesen Driften durch thermische Korrekturmittel, also thermische Aktoren entgegenzuwirken, da verursachendes und lösendes Prinzip dieselbe Funktionalität haben, also z. B. auf ähnlichen Zeitskalen wirken, denselben Umgebungseinflüssen ausgesetzt sind etc.

Ebenfalls ein besonders vorteilhafter, kompakter und einfacher Aufbau kann dadurch erreicht werden, dass diese positionsbestimmenden Elemente gleichzeitig auch die tragenden Elemente darstellen, welche zur Fixierung des optischen Elements dienen. Als positionsbestimmende Elemente eignen sich in diesem Fall besonders Stahlstifte oder Stahldrähte, beispielsweise aus Edelstahl oder Federstahl, da diese einen sehr hohen spezifischen elektrischen Widerstand und eine vergleichsweise hohe mechanische Festigkeit und Elastizität haben. Edelstahl kann zudem auf hohe Temperaturen gebracht werden, ohne durch Oxidation zerstört zu werden. Diese Materialien sind anderen Leitermaterialien wie Kupfer, Messing oder Aluminium deutlich vorzuziehen, obwohl auch letztgenannte Materialien eingesetzt werden können.

Bei einem derartigen Aufbau muss jedoch ein Kompromiss zwischen Stabilität und maximal möglicher Auslenkung des Aktors gefunden werden, da eine höhere Stabilität insbesondere durch größere Durchmesser der positionsbestimmenden Leiterelemente erzielt werden kann, ein größerer Durchmesser aber wegen der größeren Oberfläche und der höheren Wärmediffusion eine deutlich höhere elektrische Leistungen zur Aufheizung erfordert. Eine zu große zusätzliche Aufheizung der Vorrichtung durch die an den Aktor abgegebene elektrische Leistung ist in der Regel jedoch unerwünscht und begrenzt den erreichbaren Wirkungsbereich. Ein derartiger Aktor ist also insbesondere dann vorteilhaft, wenn nur kleine optische Elemente bewegt werden sollen, das Gerät kaum Erschütterungen ausgesetzt ist und im Gerät kein Platz für größere Aktoren vorhanden ist. Diese Voraussetzungen sind in vielen fotografischen Laserbelichtern gegeben. Soll der Aktor zur Fasereinkopplung verwendet werden kann ein derartiger Aufbau ebenfalls von erheblichem Vorteil sein.

In anderen Fällen ist es oft vorteilhaft an Stelle dieser primären Heizung eine sekundäre Heizung anzuwenden. Hierbei wird ein unabhängiges Heizelement auf das positionsbestimmende und eventuell gleichzeitig statische also tragende Element des Aktors aufgebracht. Diese Ausführungsvariante gestattet zwar nicht ganz so einfache Konstruktionen, wie das primäre Heizen, jedoch brauchen nicht die genannten Kompromisse zwischen vertretbaren Stromstärken und der mechanischen Stabilität eingegangen zu werden. Die tragenden und positionsbestimmenden Elemente können z. B. aus Aluminium gefertigt werden, oder jedem anderen Material, das einen recht hohen thermischen Ausdehnungskoeffizienten bei gleichzeitig hoher mechanischer Festigkeit und guter Bearbeitbarkeit aufweist. Als Heizelemente können elektrische Widerstände Verwendung finden, die in großer Vielfalt erhältlich sind und eine optimale Anpassung an die benötigte Leistung und eine einfache elektrische Ansteuerung erlauben. Da die tragenden Elemente oft sehr klein gestaltet werden können, reicht ggf. die mit einfachen SMD-Widerständen erzielbare Heizleistung aus.

Eine weitere Möglichkeit eines sekundären Heizens besteht darin, durch Aufbringen von Heizelementen auf im Gerät bereits vorhandene mechanische Komponenten an geeigneter Stelle eine ausreichende Beeinflussung der Strahllage zu erreichen, und dadurch mechanische Bauteile zu Aktoren umzufunktionieren. Hierbei muss jedoch beachtet werden, dass keine unkontrollierte oder eine zu langsame oder zu geringe Aktorbewegung erfolgt, oder die applizierte thermische Leistung das System stört. Im Allgemeinen ist von dieser Lösung eher abzuraten, da es bei dieser nicht so einfach ist, eine kontrollierte Steuerung zu bewirken.

In einer besonders vorteilhaften platzsparenden Ausführungsform des Aktors sind die positionsbestimmenden, thermisch ausdehnbaren Aktorelemente zugleich die Elemente, welche ein Trägerelement für die optischen Elemente tragen. Diese Ausführungsform ist insbesondere dann vorteilhaft, wenn die Anforderungen an die Stabilität nicht besonders hoch sind, aber der Aktor aus Platzgründen möglichst klein gebaut werden soll. In dieser Ausführung wird also die durch die Heizung induzierte thermische Ausdehnung der positionsbestimmenden Aktorelemente direkt in eine Bewegung des Trägerelements und damit der optischen Elemente umgesetzt.

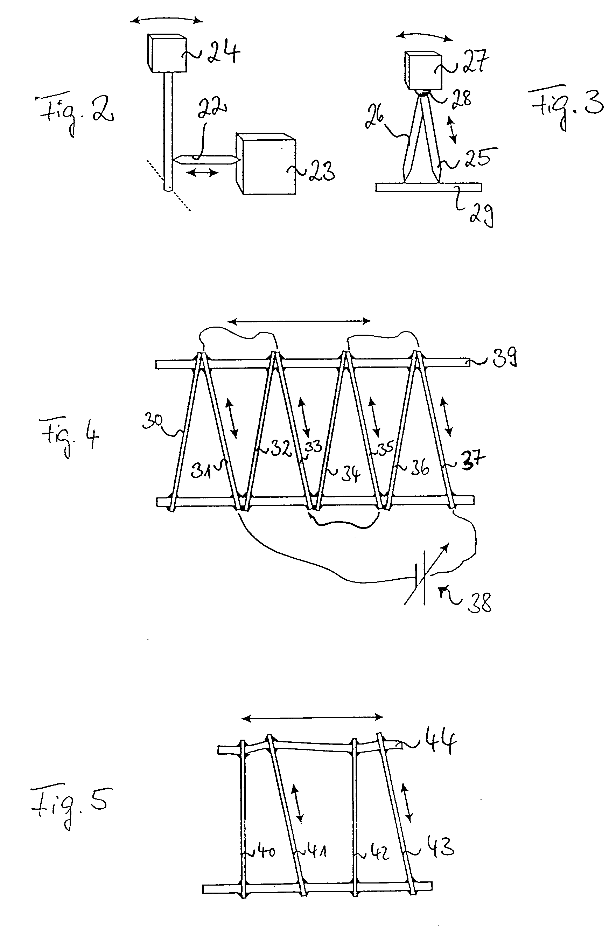

Da die thermischen Ausdehnungskoeffizienten der in Frage kommenden Materialien für viele Anwendungen recht gering sind und man aus Stabilitäts- und Platzgründen keine unnötige Baugröße wünscht, bieten sich Übersetzungsmechanismen an, die eine kleine Bewegung in eine größere transformieren. Im einfachsten Fall können die Aktoren am zu bewegenden Element über einen mechanischen Hebel angreifen, der diese Aufgabe erfüllt. Ein Beispiel hierfür ist in den Ausführungsbeispielen in Fig. 2 dargestellt.

Eine weitere Möglichkeit besteht darin, den Aktor mit einem positionsbestimmenden Aktorelement zur Bewegung und einem weiteren, statischen Aktorelement zu versehen, wobei diese Aktorelemente so relativ zueinander angeordnet werden, dass die gewünschte Bewegungsrichtung nicht in der Ausdehnungsrichtung des positionsbestimmenden Aktorelements erfolgt, sondern in einem mehr oder weniger großen Winkel dazu. Hierbei können beispielsweise Anordnungen gewählt werden, bei denen die Punkte der angreifenden Kräfte, insbesondere spitzwinklige, Dreiecke darstellen. Ein Beispiel hierfür ist in Fig. 3 dargestellt. Da positionsbestimmende und statische Aktorelemente in diesem Fall im Wesentlichen in Dreiecksform angeordnet sind, kann diese Art der Kraftübersetzung auch trigonometrische Übersetzung genannt werden. Wird z. B. der eine Schenkel eines spitzwinkligen Dreiecks (mit dem Spitzwinkel ϕ) im Vergleich zum anderen Schenkel um die Strecke Δ x elongiert, so bewegt sich die Spitze des Dreiecks in grober Näherung etwa um Δ y = Δ x 1/tan ϕ, senkrecht zur Elongation.

Durch sehr kleine Winkel lassen sich daher im Prinzip sehr große Bewegungen erreichen. Dem sind jedoch durch die Festigkeit der verwendeten Materialien einerseits, durch die erforderlichen Kräfte am bewegten Objekt andererseits Grenzen gesetzt. Die erforderlichen statischen Kräfte zum Bewegen einer kleinen und leichten optischen Komponente mögen zwar sehr klein sein, durch Vibrationen des Gerätes können jedoch hohe Anforderungen an die Steifigkeit der Aufhängung bestehen, und damit an die Größe der dynamischen Kräfte.

Insbesondere bei der Verwendung des primären Heizens erlauben die Anforderungen an den Aktor-Hub einerseits und an die Steifigkeit andererseits oftmals keinen geeigneten Kompromiss, da beim geforderten Aktor-Hub die Steifigkeit so gering ist, dass das System für die Anwendung zu vibrationsanfällig werden könnte. In diesem Fall bietet es sich an, mehrere Aktorelemente parallel zu betreiben. Im Fall des primären Heizens können diese Elemente elektrisch hintereinander, mechanisch jedoch parallel geschaltet sein.

Im Vergleich zu einem aus einem einzelnen Aktorelement oder-elementenpaar bestehenden Aktor erhöht sich die Hubkraft sowie die Festigkeit bei mehreren mechanisch parallel geschalteten Aktorelementen bei gleichbleibendem Hub.

In einer besonders vorteilhaften Ausführungsform können die mehreren Aktorelemente unabhängig voneinander oder gegenläufig bewegt werden. Dies ist beispielsweise dadurch realisierbar, dass mehrere positionsbestimmende Aktorelemente jeweils mit einem unabhängigen Heizelement verbunden sind oder von einem Heizelement unabhängig voneinander steuerbar sind. Dies kann beim primären Heizen beispielsweise durch eine Stromquelle realisiert werden, welche über jeweils eine Steuerung mit den positionsbestimmenden Aktorelementen verbunden ist. Die zwischengeschaltete Steuerung erlaubt es, die Aktorelemente unterschiedlich zu betreiben. Ein derartiger Aufbau erlaubt es, mehrdimensionale Bewegungen der Trägerelemente und damit der optischen Elemente auszuführen. Dadurch lassen sich Laserstrahlen in verschiedene Richtungen ablenken bzw. stabilisieren, was bei herkömmlichen Aktoren nur durch die Verwendung mehrerer Aktoren in einem Strahlengang realisiert werden kann. Erfindungsgemäße Aktoren eignen sich also besonders gut zur Realisierung mehrdimensionaler Aktoren, da der prinzipielle Aufbau mit ausdehnbaren positionsbestimmenden, heizbaren Aktorelementen eher einfach und auf eine beliebige Anzahl von Aktorelementen erweiterbar ist. Hierin liegt ein besonderer Kostenvorteil gegenüber herkömmlichen Aktoren, da ein mehrdimensionaler Aktor natürlich deutlich billiger ist, als mehrere nur eindimensional bewegbare Aktoren, welche jeweils mit einem eigenen Steuer- und Ansteuerelement ausgerüstet sein müssen.

Insbesondere ist die Anforderung an die Ansteuerung bei den erfindungsgemäßen Aktoren auch deutlich geringer, sie ist damit billiger, als z.B. bei Piezoaktoren. Im Gegensatz zu Piezoaktor-Ansteuerungen werden nämlich keine hohen Spannungen, sondern -insbesondere beim primären Heizen- eher hohe Ströme bei gleichzeitig sehr niedrigen Spannungen benötigt. Durch den niedrigen Widerstand von mechanisch tragenden Aktorelementen mit größerem Querschnitt können Ströme von einigen Ampere erforderlich sein. (Die am Heizelement abfallende Spannung ist dabei jedoch sehr klein, die Leistung also relativ gering.) Beim sekundären Heizen dagegen kann durch die Wahl des elektrischen Widerstandes des Heizelementes eine optimale Anpassung an die gegebene elektrische Versorgung stattfinden. In vielen Anwendungen liegt die benötigte Heizleistung im Bereich unter 100 mW. Bei typischen Versorgungsspannungen von 5 bis 15 Volt liegen die benötigten Ströme dann im Bereich von einigen 10 mA, die von den verwendeten Operationsverstärkern sogar ohne Treiberstufen direkt geliefert werden können. Da bspw. eine bipolare Stromquelle wegen der quadratischen Abhängigkeit keinen Vorteil zeigt, kann die Endstufe, die das Heizelement treibt, sehr einfach gestaltet werden, auch wenn höhere Ströme erforderlich sind. Sie besteht im einfachsten Fall aus einem Leistungstransistor, da nicht einmal eine Linearität der Treiberstufe gefordert ist. Werden hohe Ströme bei geringen Spannungen benötigt, ist eine Stromtreiberstufe einer Spannungstreiberstufe vorzuziehen, auch im Hinblick auf eine Kurzschlußfestigkeit ohne zusätzlichen Schaltungsaufwand. Da thermische Aktoren naturgemäß relativ langsam arbeiten, bieten sich auch schaltende Treiber an, wenn gewährleistet ist, daß die geschalteten Ströme keine anderen Schaltungsteile stören.

Um definitiv alle möglichen Bewegungsrichtungen in die ein Laserstrahl abdriften kann durch einen einzigen Aktor auszugleichen, wird ein besonders vorteilhafter Aufbau des Aktors vorgeschlagen. Ausgegangen wird hierbei von der Anordnung drei linearer Aktoren in einem Tetraeder. Diese erlauben jede beliebige dreidimensionale Translation eines Punktes im Raum. Ein reeler zu bewegender Körper hat jedoch noch die Möglichkeit der Rotation um drei Raumachsen, die in der Regel ebenfalls ausreichend geführt werden müssen. Wird nun dieser Körper entsprechend auf Tetraeder-Anordnungen gelagert, die jeweils parallel zueinander betrieben werden, so kann der Körper jede beliebige Translation im Raum ausführen, dies jedoch ohne Rotation. Werden dagegen die Tetraeder unabhängig voneinander angesteuert, kann der Körper zusätzlich auch noch alle Rotationsbewegungen durchführen.

Bei genauerer Analyse der Aktionsrichtungen stellt man fest, dass die Definition bestimmter Freiheitsgrade durch die Aktorelemente teilweise redundant ist und dass daher bei einer geeigneten Ausrichtung je ein Aktor jedes Tetraeder entfernt werden kann, dass also statt neun nur noch sechs Aktoren Verwendung finden.

Eine solche Anordnung ist bekannt unter dem Namen "Hexapod". Die Anzahl der sechs Aktoren entspricht genau der Gesamtzahl der drei translatorischen und drei rotatorischen Freiheitsgrade. Jedoch entspricht nicht jeder Aktor genau einem Freiheitsgrad. Vielmehr müssen die Aktoren zur Durchführung einer Bewegung eines Freiheitsgrades eine kompliziert zu errechnende Kombinationsbewegung ausführen.

Im hier vorgeschlagenen Konzept bestehen die Aktorelemente im einfachsten Fall aus stromdurchflossenen Leitern, also z. B. kleinen Drahtabschnitten, die mit gesteuerten Strömen geheizt werden und ermöglichen damit sehr kleine, leichte und nahezu kostenlose Aktoren. Zudem können sie selbst als mechanisch tragende Elemente verwendet werden und ersetzen auf diese Weise sogar andere sonst erforderliche Konstruktionselemente. Diese stromleitenden Aktorelemente können mit einfachen Standard-Leiterplatinen als Grundplatte und Trägerelement kombiniert werden. Einerseits sind diese bereits in Standardversionen aus glasfaserverstärktem Epoxidharz gefertigt, das ein geringes Gewicht, eine hohe Festigkeit, eine gute Langzeitstabilität und eine hohe Steifigkeit aufweist. Vor allem lassen sich die erforderlichen elektrischen Verbindungen der Aktoren untereinander und zu den Steckverbindern auf simple Weise mit den Standardtechniken der Leiterplattenentwicklung konstruieren und extrem preisgünstig fertigen. Sogar die Montage der Aktoren kann bei geeigneter Konstruktion mit den Standardbestükkungstechniken erfolgen. (Bei erhöhten Anforderungen an die Steifigkeit der Montageplatten kann auch auf keramisches Leiterplattenmaterial zurückgegriffen werden). Auf diese Weise (und wegen der Einfachheit der Ansteuerung mit sehr geringen Spannungen und Strömen) können so aktive Stabilisierungen äußerst preiswert hergestellt werden. Es bietet sich daher die Realisierung von Hexapods oder ähnlicher Konstruktionen mit diesen einfachen, kostengünstigen thermischen Aktoren an.

In einem erfindungsgemäßen Verfahren bei dem Laserstrahlen exakt ausgerichtet werden sollen, wird die aktuelle Lage der Strahlen ermittelt und mit dem angestrebten Sollwert der Strahllage verglichen. Ergibt sich eine Abweichung so wird ermittelt, um wieviel die Strahllage des Laserstrahls korrigiert werden muss. Diese Korrektur wird mittels optischer Elemente wie Linsen, Spiegel oder planparallelen Platten etc. durchgeführt, welche mittels eines thermischen Aktors bewegt werden, indem positionsbestimmende Aktorelemente durch Heizen (oder Kühlen) thermisch ausgedehnt (oder kontrahiert) werden. Die Heizung (oder Kühlung) erfolgt gesteuert, so dass gezielt jede gewünschte Ausdehnung (oder Kontraktion) und damit jede beliebige auch noch so kleine Bewegung realisiert werden kann. Dadurch wird ein hochpräzises Positionieren der Laserstrahlen ermöglicht.

Eine vorteilhafte Ausführung des Heizens der postitionsbestimmenden Aktorelemente besteht darin leitende Elemente zu verwenden, welche von einem regelbaren Strom durchflossen werden. Je nach Stromgröße dehnen sich diese Aktorelemente mehr oder weniger aus, was eine Bewegung von optischen Elementen bewirkt, welche mit diesen Aktorelementen in Kontakt stehen. Diese Ausführung ist besonders kostengünstig, da keine externen Heizelemente notwendig sind, die Aktorelemente selbst stellen die Heizelemente dar.

Da in diesem Fall aber eine möglichst effiziente Ausdehnung der positionsbestimmenden Aktorelemente bei gleichzeitiger Stabilität des Aktors unter Umständen nur schwer zu erreichen ist, ist es in Anwendungsfällen, bei denen die Stabilität vorrangig ist, oftmals vorteilhafter die positionsbestimmenden Aktorelemente mit Heizelementen mit größerem Wirkungsgrad in Kontakt zu bringen, um eine Ausdehnung herbeizuführen.

Ein erfindungsgemäßer Aktor zum Steuern der Strahllage von Laserstrahlen weist Trägerelemente für die Strahl ablenkenden optischen Elemente auf sowie Aktorelemente, welche mit dem Trägerelement in Verbindung stehen und die mindestens teilweise mit einem steuerbaren Heizelement in Verbindung stehen. Die mit dem steuerbaren Heizelement verbundenen Aktorelemente sind thermisch in ihrer Ausdehnung veränderbar. Durch die Veränderung der thermischen Ausdehnung dieser positionsbestimmenden Aktorelemente wird das Trägerelement und damit das darauf aufgebrachte optische Element bewegt. Der Aktor weist zusätzlich zu den thermisch ausdehnbaren Elementen statische Aktorelemente auf, welche ebenfalls mit dem Trägerelement in Verbindung stehen und für eine erhöhte Stabilität des Aktors benötigt werden. In einer entsprechend vorteilhaften Anordnung ist es auch möglich alle Aktorelemente thermisch ausdehnbar zu gestalten, so dass positionsbestimmende Aktorelemente zugleich statische Aktorelemente sind. Hierbei müssen jedoch Kompromisse zwischen für die Ausdehnung aufzubringende Heizleistung und Stabilität des Aktors geschlossen werden. Muss der Aktor also eine gewisse Stabilität aufweisen, ist es vorteilhafter getrennte positionsbestimmende und statische Aktorelemente zu verwenden. Soll der Aktor dagegen möglichst kompakt gebaut werden, ist es vorteilhafter nur thermische Aktorelemente zu verwenden.

Besonders vorteilhaft ist es positionsbestimmende und statische Aktorelemente in Dreiecken oder zumindest dreiecksähnlich also im Winkel zueinander aber auch in gewissem Abstand zueinander anzuordnen, wobei der Winkel zwischen den Elementen kleiner 45° sein muss. Hierdurch wird eine mechanische Übersetzung der Ausdehnung des positionsbestimmenden Aktorelements erreicht.

Eine besonders vorteilhafte Ausführungsform sieht vor, den Winkel zwischen positionsbestimmenden und statischen Aktorelementen kleiner als 20° zu wählen.

Für die Übersetzung ist es um so vorteilhafter, je kleiner der Winkel gewählt wird. Hierbei sind jedoch Stabilitätsgrenzen gesetzt, da spitzwinkligere Dreiecke eine weniger stabile Basis für das Trägerelement bilden, als weiter voneinander entfernte Aktorelemente.

Diese Stabilitätseinbuße kann vorteilhafterweise dadurch aufgehoben werden, dass mehrere positionsbestimmende und/oder mehrere statische Aktorelemente verwendet werden, welche parallel zueinander angeordnet sind. Das Verwenden mehrerer Aktorelemente bewirkt sowohl eine größere Hubkraft als auch eine größere Stabilität des Systems. Ferner ist es möglich die positionsbestimmenden Aktorelemente unabhängig voneinander zu bewegen, wodurch gewährleistet wird, dass der Aktor in viele Raumrichtungen bewegbar ist. Hierdurch sind mehrdimensionale Aktoren realisierbar, der Laserstrahl kann je nach Aufbau und Anordnung der positionsbestimmenden Elemente in beliebige Richtungen abgelenkt werden, was bei herkömmlichen eindimensional bewegbaren Aktoren nur durch den Einsatz mehrerer Aktoren möglich ist.

Eine besonders vorteilhafte Anordnung der Aktorelemente besteht in einem Tetraeder. Eine Tetraeder-Anordnung erlaubt beliebige dreidimensionale Translationen und damit Ablenkung des Laserstrahls in drei Raumrichtungen. Werden mehrere dieser Tetraeder-Anordnungen verwendet, so ergeben sich sehr bewegliche mehrdimensionale relativ stabile Aktoren.

Eine besonders vorteilhafte Fortführung dieser Tetraeder-Anordnungen ist ein Hexapod, welches dadurch entsteht, dass 3 Tetraeder-Anordnungen verwendet werden, um ein Trägerelement zu halten und zu bewegen, wobei von den Tetraedern jeweils ein Aktorelement entfernt wird und die verbleibenden Aktorelemente miteinander in Verbindung stehen. Mit diesem Aufbau ist es möglich Bewegungen in alle drei Raumrichtungen auszuführen, ohne dabei unerwünschte Rotationen in Kauf nehmen zu müssen oder auch um diese Rotation gezielt zu bewirken.

Die Erfindung ist nicht auf diese Beispiele beschränkt, denn es lassen sich mit derartigen Anordnungen von Aktorelementen in Unteraktorgruppen beliebige Kombinationen realisieren. So sind auch Oktapod- oder Multipod-Anordnungen vorstellbar.

Eine besonders vorteilhafte Ausführungsform besteht darin, die positionsbestimmenden und statischen Aktorelemente durch Stahlstifte zu realisieren, wobei die positionsbestimmenden Elemente an eine Stromquelle angeschlossen sind, so dass sie als stromdurchflossene Leiter erwärmbar sind, wodurch es zur gewünschten Ausdehnung kommt. Diese Ausführung ist besonders einfach und kostengünstig herzustellen. Als Trägerelement lassen sich besonders vorteilhaft Leiterplatinen verwenden. Diese haben die erforderliche Steifigkeit, sind sehr gut mit den Stahldrähten in Verbindung zu bringen und sind ebenfalls kostengünstig.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: zeigt eine schematische Darstellung eines Laserbelichters unter Verwendung der erfindungsgemäßen Aktoren,
- Fig. 2: zeigt einen erfindungsgemäßen Aktor mit einer Hebelübersetzung,
- Fig. 3: zeigt einen erfindungsgemäßen Aktor mit einer trigonometrischen Übersetzung,
- Fig. 4: zeigt einen erfindungsgemäßen Aktor mit mehreren positionsbestimmenden und statischen Elementen,
- Fig. 5: zeigt einen weiteren Aktor mit mehreren positionsbestimmenden und mehreren statischen Elementen,
- Fig. 6: zeigt einen Aktor, dessen Elemente eine Tetraeder-Anordnung aufweist,
- Fig. 7: zeigt einen Aktor, der aus mehreren Unteraktoreinheiten in Tetraeder-Anordnungen aufgebaut ist,
- Fig. 8: zeigt einen Aktor, dessen Elemente in einem Hexapod angeordnet sind,
- Fig. 9 und 10: zeigen Aktoren, deren Elemente in einem Oktapod angeordnet sind, und
- Fig. 11: zeigt einen Aktor zur Strahlpositionseinstellung mittels einer zweidimensional bewegten optischen Linse.

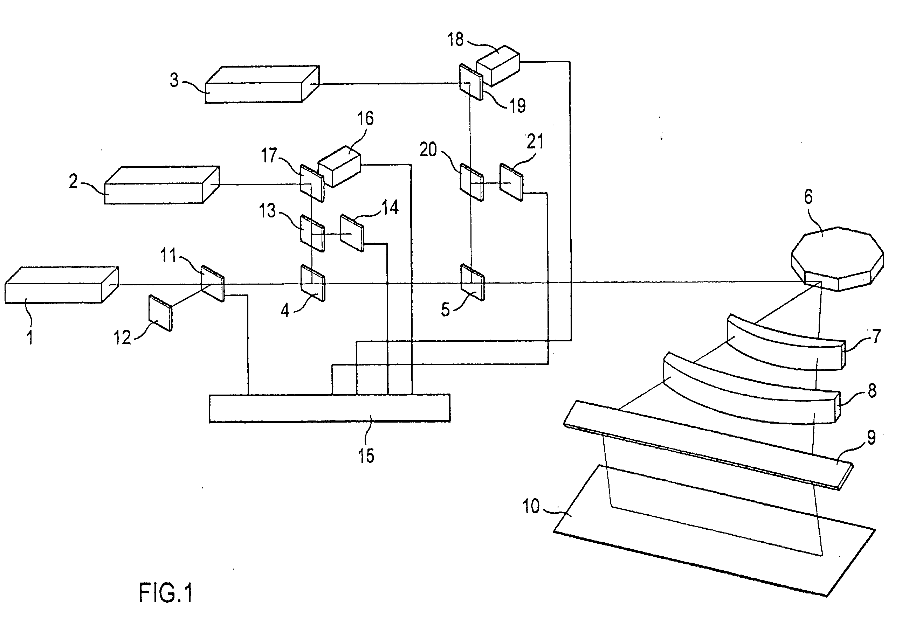

Fig. 1 zeigt einen Laserbelichter, der aus mehreren Laserstrahlen aufgebaut ist. Hierbei kann es sich um einen Printer mit mehrfarbigen Lasern handeln oder aber um einen einfarbigen Laserbelichter, der zur Erhöhung der Lichtintensität und damit zur schnelleren Belichtung mehrere gleichartige Laserstrahlen verwendet. Die Laserstrahlen werden von den Laserquellen 1, 2 und 3 emittiert. Sie werden durch die Strahlvereiniger 4 und 5, welche beispielsweise aus dichroitischen Spiegeln bestehen, auf einen Lichtweg vereinigt. Der vereinigte Laserstrahl trifft auf einen Polygonspiegel 6 von dessen Facetten er auf zwei Linsen 7 und 8 abgelenkt wird. Die Linsen 7 und 8 bilden den Laserstrahl auf einen Spiegel 9 ab, über den der Strahl auf lichtempfindliches Material 10 gelenkt wird. Als lichtempfindliches Material kommt je nach Art des Laserbelichters beispielsweise Fotopapier zur Verwendung, es kann sich aber auch um thermografisches oder sonstiges Material handeln.

In derartigen Laserbelichtern ist es für die Bildqualität von besonderer Bedeutung, die mehreren Laserstrahlen exakt übereinander zu legen, so dass beispielsweise bei verschiedenen Farblasern keine Farbsäume beim Schreiben einer Zeile entstehen. Aus diesem Grund wird über einen Strahlteiler 11 ein Teil des ersten Laserstrahls auf einen Positionssensor 12 gelenkt, um die Strahllage des ersten beispielsweise roten Laserstrahls exakt zu bestimmen. Die Strahllage des zweiten beispielsweise blauen Laserstrahls muss nun exakt mit der Strahllage des ersten Laserstrahls in Übereinstimmung gebracht werden. Zu diesem Zweck wird auch der Laserstrahl 2 teilweise über einen Strahlteiler 13 auf einen weiteren Positionssensor 14 abgelenkt. Der Positionssensor 14 bestimmt die aktuelle Lage des Laserstrahls 2 und gibt diese Information an ein Steuerelement 15 weiter, zu dem auch der erste Positionssensor 12 bereits die Strahllage des ersten Laserstrahls übermittelt hatte. An diesem Steuerelement werden die beiden Strahllagen verglichen und bei einer Abweichung eine Steuergröße ermittelt, welche ein Maß dafür ist, wie stark die Position des Laserstrahls 2 zu verändern ist, um eine Übereinstimmung der Strahllagen zu gewährleisten. Diese Steuergröße wird an einen thermischen Aktor 16 übermittelt, welcher mit einem Spiegel 17 in Verbindung steht, an dem der Laserstrahl 2 reflektiert wird. Muss die Position des Laserstrahls 2 verändert werden, so wird ein nicht gezeigtes Heizelement entsprechend angesteuert, positionsbestimmende Aktorerlemente im Aktor 16 werden ausgedehnt und damit wird der Spiegel 17 bewegt, so dass der Laserstrahl 2 in leicht verändertem Winkel reflektiert wird, was seine Strahllage beeinflusst. In einer Regelung wird diese Strahllage fortlaufend weiter überwacht, die aktuelle Strahllage wird wiederum am Steuerelement 15 verglichen und weiter über den thermischen Aktor nachgeregelt, falls eine Übereinstimmung mit dem Laserstrahl 1 nach wie vor nicht gegeben ist. Nach demselben Prinzip wird die Strahllage eines weiteren beispielsweise grünen, von der Laserquelle 3 emittierten Strahls mit der räumlichen Strahllage der Laserstrahlen 1 und 2 in Übereinstimmung gebracht. Auch dieser Laserstrahl wird mittels eines thermischen Aktors 18, welcher einen Spiegel 19 zur Positionierung bewegt, in seiner Strahllage verändert. Die aktuelle Strahllage wird ebenfalls bestimmt, indem ein Teil des Laserstrahls an einem teildurchlässigen Strahlteiler 20 auf einen Detektor 21 geleitet wird. Auch diese Strahlposition wird zum Steuerelement 15 übermittelt, an dem alle drei räumlichen Strahllagen zusammenfließen, um dort Verstellgrößen für die thermischen Aktoren und deren bewegte optische Elemente zu ermitteln.

Positionsbestimmung und Korrektur der räumlichen Strahllage der Laserstrahlen können laufend während des Betriebs des Laserbelichters erfolgen. Dadurch ist es möglich alle kurz- und langfristigen Driften der Laserstrahlen, welche sich insbesondere auf Grund von thermischen Veränderungen der optischen Komponenten bzw. der Instabilitäten der Laserquellen selbst ergeben zu korrigieren. So können billigere, nicht so stabile Laserquellen verwendet werden und auf eine thermische Stabilisierung des Gesamtaufbaus kann verzichtet werden.

Die Verwendung thermischer Aktoren ist in dieser Anwendung besonders vorteilhaft, da insbesondere bei hochauflösend Lasern zum Belichten von fotografischem Material sehr exakte räumliche Übereinstimmungen der Strahllagen gefordert sind. Derartig exakte Übereinstimmungen sind nur möglich, wenn die Strahllagen in infinitesimal kleinen Schrittweiten veränderbar sind. Dies wäre beispielsweise durch die Verwendung von einfachen Schrittmotoren als Aktoren nicht möglich. Alternativ könnten allenfalls hochpräzise Piezo-Aktoren verwendet werden, welche allerdings Präzisionshochspannungsverstärker und -versorgungen erfordern, die sehr hohe Kosten verursachen. Die erfindungsgemäßen thermischen Aktoren dagegen lassen ebenfalls sehr präzise Bewegungen und damit exakte Positionierungen der Strahllagen zu. Die Kosten des erfindungsgemäßen Aktors sind dagegen sehr gering, da er mit einfachen Materialien und Bauteilen zu realisieren ist und auch sehr einfach angesteuert werden kann.

Da viele der für die postitionsbestimmenden Aktorelemente in Frage kommenden Materialien relativ geringe thermische Ausdehnungskoeffizienten haben, in manchen Anwendungen aber auch größere Bewegungen der optischen Elemente erforderlich sind, ist es vorteilhaft bei der Realisierung von thermischen Aktoren Übersetzungsmechanismen zu verwenden. Ein Beispiel hierfür ist in Fig. 2 dargestellt. Hier greift ein Aktorelement 22, dessen Länge über ein steuerbares Heizelement 23 veränderbar ist, über einen mechanischen Hebel am zu bewegenden optischen Element 24 an. Bereits eine geringe Ausdehnung des Aktorelementes 22 führt je nach Hebellänge zu einer relativ großen Bewegung des optischen Elements.

Eine weitere sehr einfache in Fig. 3 dargestellte Möglichkeit zur Realisierung einer mechanischen Übersetzung besteht darin, ein positionsbestimmendes Aktorelement 25 und ein statisches Aktorelement 26 so relativ zueinander anzuordnen, dass die gewünschte Bewegungsrichtung des optischen Elements 27 nicht in der Ausdehnungsrichtung der Elemente erfolgt, sondern in einem mehr oder weniger großen Winkel dazu. In dieser Anordnung ist es sinnvoll, das optische Element über ein Trägerelement 28 mit den Aktorelementen zu verbinden, da dieses Trägerelement 28 als Gelenk ausgebildet werden kann und somit genügend Bewegungsfreiheit ermöglicht. Die Stabilität des Aktors wird dadurch erhöht, dass die Aktorelemente auf einer Grundplatte 29 befestigt sind. Auch in diesem Fall muss natürlich das positionsbestimmende Aktorelement, welches beispielsweise in einem Stahlstift besteht, der mit einer Stromquelle, welche aber nicht dargestellt ist, verbunden ist. Bei dieser Übersetzung lassen sich um so größere Bewegungen erreichen, je kleiner der Winkel zwischen den Aktorelementen ist. Bei sehr kleinen Winkeln leidet jedoch die Festigkeit des das optische Element tragenden Aktorelement-Dreiecks. Somit können Vibrationen der Gesamtvorrichtung oder ähnliche Störungen nicht abgefangen werden. Aus diesem Grund muss entweder bei der Wahl der Dreieckswinkel ein Kompromiss zwischen Festigkeit und maximaler Bewegung gefunden werden oder die Steifigkeit des System anderweitig erhöht werden.

Eine besonders vorteilhafte Möglichkeit zur Erhöhung der Steifigkeit des Aktors ist in Fig. 4 dargestellt. Sie besteht darin mehrere Aktorelemente 30 - 37 parallel zueinander anzuordnen. Da jeweils eines der parallel angeordneten Elemente 31, 33, 35 und 37 thermisch ausdehnbar und mit einer Stromquelle 38 verbunden ist, entsteht eine Gruppe von Unteraktorverbänden, welche bei gleichbleibendem Bewegungs-Hub eine deutlich größere Kraft übermitteln, und auch eine deutlich erhöhte Steifigkeit des Aktors und damit Unempfindlichkeit gegenüber äußerer Störungen bewirken. Die Bewegung des Trägerelements 39 erfolgt dadurch, dass die stromdurchflossenen Aktorelemente 31, 33 35 und 37 in Abhängigkeit vom durchfließenden Strom ihre Ausdehnung ändern und dabei die statischen Elemente 30, 32 34 und 36 sowie das Trägerelement 39 nach einer Seite bewegen. Verlängert sich beispielsweise die Ausdehnung der stromdurchflossenen Elemente, so erfolgt eine Bewegung des Trägerelements in Richtung der statischen Elemente. Wird der Strom reduziert, so dass sich die stromdurchflossenen Elemente wieder zusammenziehen erfolgt eine Bewegung des Trägerelements 39 in Richtung der stromdurchflossenen Elemente, also in der Darstellung nach rechts.

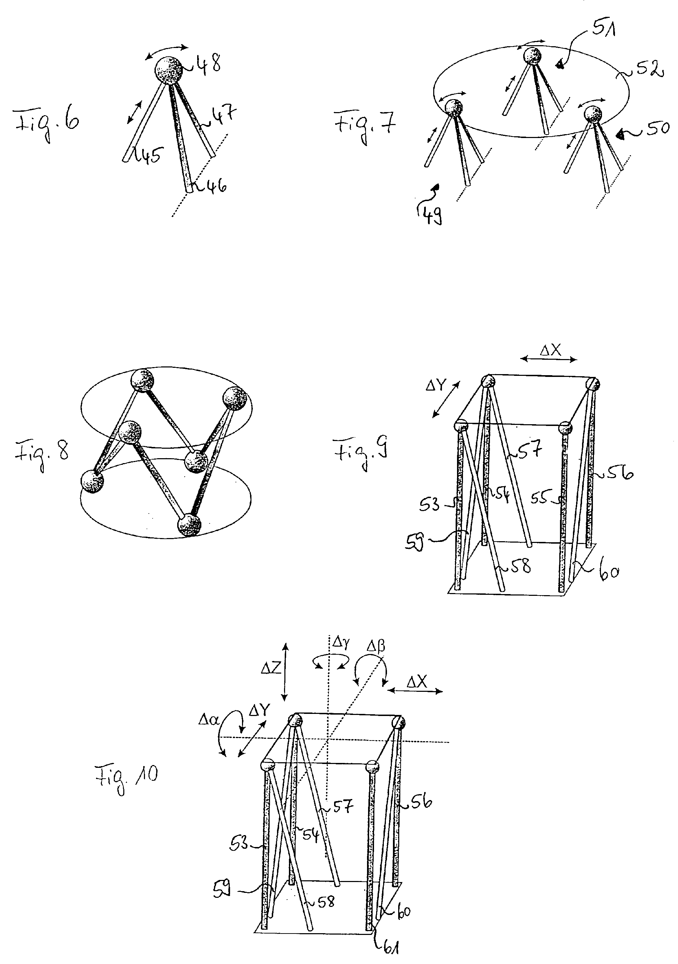

In Fig. 5 ist ein detaillierterer Ausschnitt aus einer derartigen aus mehreren Aktorelementen bestehenden Unteraktor-Anordnung dargestellt. Bei der Realisierung derartiger Anordnungen ist es nämlich im Allgemeinen nicht möglich, mit den Aktorelementen reale Dreiecke zu bilden. Vielmehr werden im Allgemeinen schiefwinklige Trapeze, wie mittels der Aktorelemente 40, 41, 42 und 43 in Fig. 5 gezeigt, gebildet, denn positionsbestimmendes thermisch auszudehnendes Aktorelement 41 bzw. 43 und statisches Aktorelement 40 bzw. 42 sollten zumindest in geringem Abstand zueinander angeordnet sein, damit sie befestigbar sind und kein Wärmeübertrag zwischen den beiden Elementen stattfindet. Dies ist prinzipiell von der Berechnung der Bewegung kein Problem, jedoch muss die Trägerplatte 44 des bewegten optischen Elements dann erheblich größere Biegekräfte aufnehmen. Hat diese eine ungenügende Steifigkeit, so geht einerseits Übersetzung verloren, vor allem aber transformiert sich die zu geringe Steifigkeit der verwendeten Trägerplatten im gewählten Winkelverhältnis herunter, so dass z. B. eine Linsenaufhängung durch die geringe Plattensteifigkeit stärker zu Vibrationen neigt. Aus diesem Grund muss das Trägerelement 44 ausreichend Biegesteifigkeit aufweisen.

Die Stabilität eines derartigen Aktorsystems lässt sich insbesondere dadurch erhöhen, dass ein thermisches Aktorelement 45 mit wenigstens zwei statischen Aktorelementen 46 und 47 eine Unteraktoreinheit zur Bewegung des Trägerelements 48 bilden. Die Aktorelemente sind hierbei räumlich dreidimensional angeordnet und bilden somit ein Tetraeder. Diese Anordnung erlaubt größere Steifigkeit und eine exakter definierte eindimensionale Bewegung.

Ersetzt man dagegen die statischen Elemente 46 und 47 durch weitere positionsbestimmende thermisch ausdehnbare Aktorelemente wie das Element 45, so kann das Trägerelement 48 innerhalb des möglichen Hubs jede beliebige dreidimensionale Translation ausführen. Hierbei besteht jedoch für den zu bewegenden Körper die Möglichkeit der Rotation um drei Raumachsen. Diese muss ausreichend geführt werden, um eine kontrollierte Bewegung des Trägerelements und damit der optischen Elemente zu ermöglichen.

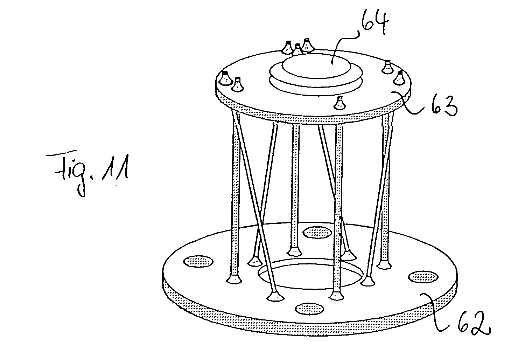

Hierzu werden wie in Fig. 7 dargestellt drei der aus Fig. 6 bekannten Tetraeder-Unteraktoreinheiten 49 50 und 51 kombiniert. Auf diesen drei Tetraeder-Anordnungen wird nun ein Trägerelement 52 gelagert. Werden nun die Tetraeder-Unteraktoreinheiten jeweils zueinander parallel betrieben, so führt das Trägerelement 52 jede beliebige Translation im Raum aus, ohne eine Rotation ausführen zu können. Werden dagegen die Tetraeder unabhängig voneinander angesteuert, so kann das Trägerelement zusätzlich auch noch alle Rotationsbewegungen durchführen. Eine solche Anordnung ist bekannt unter dem Namen Hexapod (siehe Fig. 8).

In Fig. 9 ist eine weitere mögliche Anordnung von Aktorelementen dargestellt. In diesem praktischen Ausführungsbeispiel werden acht Stahldrähte so angeordnet, dass sie eine praktisch unabhängige Bewegung einer auf der bewegten Platte montierten Linse in X- und Y-Richtung erlauben (Oktapod). Hierbei sind die senkrechten Drähte 53-56 aus deutlich dickerem Material gewählt, um eine höhere Stabilität zu erreichen. Eine variierte simultane Erwärmung der Drähte 57 und 58 führt eine Bewegung in X-Richtung aus. Gleiches gilt für die Drähte 59 und 60 bezogen auf die Y-Richtung. Gegenüber einem herkömmlichen Hexapod sind also die Bewegungen orthogonalisiert, so dass die gewünschten Bewegungsrichtungen ohne die Erzeugung komplizierter Kombinationssignale realisiert werden.

Fig. 10 zeigt ein weiteres Ausführungsbeispiel für die erfindungsgemäßen Aktoren. Dieses unterscheidet sich von der Anordnung nach Fig. 9 dadurch, dass auch die senkrechten Elemente als thermisch zu betreibende Aktoren ausgeführt sind.

Auf diese Weise können sowohl alle drei translatorischen, wie auch alle rotatorischen Bewegungen ausgeübt werden. So ist durch eine geeignete (vergleichsweise einfache) Kombination von Signalen eine orthogonale Bewegung aller Freiheitsgrade erreichbar. Die Erzeugung der erforderlichen Aktorsignale kann durch einfache Summation (mit positivem oder negativem Vorzeichen mit jeweils gleichen Summationskoeffizienten) erfolgen.

Werden wie in Fig. 11 dargestellt in derartiger Oktapod-Anordnung eingesetzte Aktorelemente zwischen einer Grundplatte 62 und einem Trägerelement 63 für ein optisches Element 64 (hier eine Linse) gesetzt, so kann die Linse in allen Raumrichtungen und Neigungen bewegt werden und somit durch die Linse fokussierte Strahlen in alle Richtungen ablenken. An Stelle der Linse kann hier natürlich auch jedes andere optische Element wie beispielsweise ein Spiegel oder ein Teleskop etc. eingesetzt werden. Obwohl die Erfindung insbesondere im Ausführungsbeispiel eines Laserbelichters beschrieben wurde, kann sie natürlich auch in allen anderen Anwendungen eingesetzt werden, in denen stabile Laserstrahllagen benötigt werden So ist Sie besonders vorteilhaft zu Einkoppeln von Laserstrahlen in Glasfasern z. B. in der Telekommunikationstechnik anwendbar. Aber auch in der Medizintechnik lassen sich Anwendungen finden, in denen sehr exakt positionierte Strahlen eine Voraussetzung für den Erfolg einer Laserbehandlung sind.

## Patentansprüche

1. Vorrichtung zum Steuern der räumlichen Strahllage von Laserstrahlen mit einem Positionsdetektor, zum Bestimmen der aktuellen Strahllage, einem Steuerelement zum Ermitteln der Steuergröße anhand der aktuellen und der angestrebten Strahllage und einem von einem Aktor bewegten optischen Element zum Verändern der Strahllage, **dadurch gekennzeichnet, dass** die Vorrichtung ein, mit einem positionsbestimmenden Aktorelement verbundenes, steuerbares Heizelement aufweist, zum Bewegen des Aktors durch thermische Ausdehnung aufgrund von Erwärmung des Aktorelements.

2. Vorrichtung nach Anspruch 1, **dadurch gekennzeichnet, dass** das positionsbestimmende Aktorelement mit einer Stromquelle in Verbindung steht, so dass das Heizelement die Ausdehnung des positionsbestimmenden Aktorelements aufgrund des durch fliessenden Stroms hervorruft.

3. Vorrichtung nach Anspruch 1, **dadurch gekennzeichnet, dass** das Heizelement mit dem positionsbestimmenden Aktorelement in Verbindung steht.

4. Vorrichtung nach Anspruch 1, **dadurch gekennzeichnet, dass** der Aktor ein Trägerelement für optische Elemente aufweist, welches mit dem positionsbestimmende Aktorelement verbunden ist, das zugleich als statisches Aktorelement fungiert.

5. Vorrichtung nach Anspruch 1, **dadurch gekennzeichnet, dass** der Aktor ein Trägerelement für optische Elemente aufweist, welches mit dem positionsbestimmenden und einem statischen Aktorelement verbunden ist.

6. Vorrichtung nach Anspruch 5, **dadurch gekennzeichnet, dass** positionsbestimmende und statische Aktorelemente in Winkeln kleiner 20° zueinander angeordnet sind.

7. Vorrichtung nach Anspruch 4 oder 5, **dadurch gekennzeichnet, dass** der Aktor mehrere positionsbestimmende und/oder mehrere statische Aktorelemente aufweist.

8. Vorrichtung nach Anspruch 7, **dadurch gekennzeichnet, dass** positionsbestimmende Aktorelemente unabhängig voneinander mit dem Heizelement verbunden sind oder unabhängige Heizelemente aufweisen, so dass sie unabhängig voneinander bewegbar sind.

9. Vorrichtung nach Anspruch 7, **dadurch gekennzeichnet, dass** positionsbestimmende und/oder statische Aktorelemente eine Hexapod-Anordnung zeigen.

10. Verfahren zum Steuern der räumlichen Strahllage von Laserstrahlen, wobei die aktuelle Strahllage mittels eines Positionsdetektor bestimmt, aus aktueller und angestrebter Strahllage eine Steuergröße ermittelt und entsprechend der Steuergröße die Strahllage mittels eines, von einem Aktor bewegten, optischen Elements verändert wird, **dadurch gekennzeichnet, dass** die Bewegung aufgrund der gesteuerten, thermischen Ausdehnung positionsbestimmender Aktorelemente erfolgt.

11. Verfahren nach Anspruch 10, **dadurch gekennzeichnet, dass** die thermische Ausdehnung von durch die Aktorelemente fließendem Strom hervorgerufen wird.

12. Verfahren nach Anspruch 10, **dadurch gekennzeichnet, dass** die thermische Ausdehnung der Aktorelemente von in thermischem Kontakt aufgebrachten Heizelementen hervorgerufen wird.

13. Aktor zum Bewegen optischer Elemente zum Beeinflussen der räumlichen Strahllage von Laserstrahlen mit
- einem Trägerelement für optische Elemente,
- wenigstens einem positionsbestimmenden, thermischen Aktorelement, welches mit dem Trägerelement in Verbindung steht und dessen Ausdehnung durch Heizung veränderbar ist,
- wenigstens einem statischen Aktorelement, welches mit dem Trägerelement in Verbindung steht und
- einem steuerbaren Heizelement zum Heizen von thermischen Aktorelementen.

14. Aktor nach Anspruch 13, wobei positionsbestimmendene und statische Aktorelemente in Winkeln kleiner 45° zueinander angeordnet sind.

15. Aktor nach Anspruch 14, wobei positionsbestimmendene und statische Aktorelemente in Winkeln kleiner 20° zueinander angeordnet sind.

16. Aktor nach Anspruch 13, wobei mehrere positionsbestimmende und mehrere statische Aktorelemente parallel zueinander angeordnet sind.

17. Aktor nach Anspruch 16, wobei positionsbestimmende Aktorelemente unabhängig voneinander bewegbar sind.

18. Aktor nach Anspruch 16, wobei das Trägerelement auf drei Tetraeder-Anordnungen aus positionsbestimmenden und statischen Aktorelemente gelagert ist.

19. Aktor nach Anspruch 16, wobei das Trägerelement auf einer Hexapod-Anordnung aus positionsbestimmenden und statischen Aktorelemente gelagert ist.
